# EUROPEAN PATENT APPLICATION

(11) **EP 1 513 144 A2**
(43) Date of publication of application: **09.03.2005**
(21) Application number: 04018201.6
(22) Date of filing: 31.07.2004
(51) Int. Cl.: G11B 7/26

(54) **Method for producing a master disk of a recording medium, method for producing a stamper, method for producing a recording medium, master disk of a recording medium, stamper of a recording medium, and recording medium**

(30) Priority: 26.08.2003 JP 2003300854
(71) Applicant: MATSUSHITA ELECTRIC INDUSTRIAL CO., LTD., Kadoma-shi, Osaka 571-8501 (JP)
(72) Inventor: Kawaguchi, Yuuko, Ibaraki City Osaka 567-0046 (JP); Ohno, Eiji, Hirakata City Osaka 573-0171 (JP); Ito, Eiichi, Nishinomiya City Hyogo 663-8033 (JP)
(74) Representative: Eisenführ, Speiser & Partner

(57) **Abstract**

A method for producing a master disk 105 for an optical disk 110 includes a layer forming step of forming a heat-sensitive material layer 102 on a substrate 101, an exposure step of exposing the heat sensitive material layer 102 partially to a laser beam, and a pit and land pattern forming step of forming a pattern of pits and lands by means of the difference between the etching rates of the exposed portion and the unexposed portion of the heat-sensitive material layer 102. The heat-sensitive material layer 102 includes at least Sb and O. When the composition ratio of O is defined as x (atom %), x is 3 or more and 50 or less.

## Description

### BACKGROUND OF THE INVENTION

### 1. Field of the Invention

The present invention relates to a method for producing a master disk for an optical disk used for reproducing information, and the like.

### 2. Description of the Prior Art

Optical recording media onto which information is recorded and reproduced by irradiation with a light beam have been widely utilized, and in the future, attention will also be focused on the improvements in recording densities thereof.

Recently, a variety of optical disks capable of reproducing image/sound data and digital data with large capacities have been developed. For example, research and development has been undertaken so as to increase the storage capacity of an optical disk having a diameter of 12 cm up to a high density of 23.3 to 30 GB.

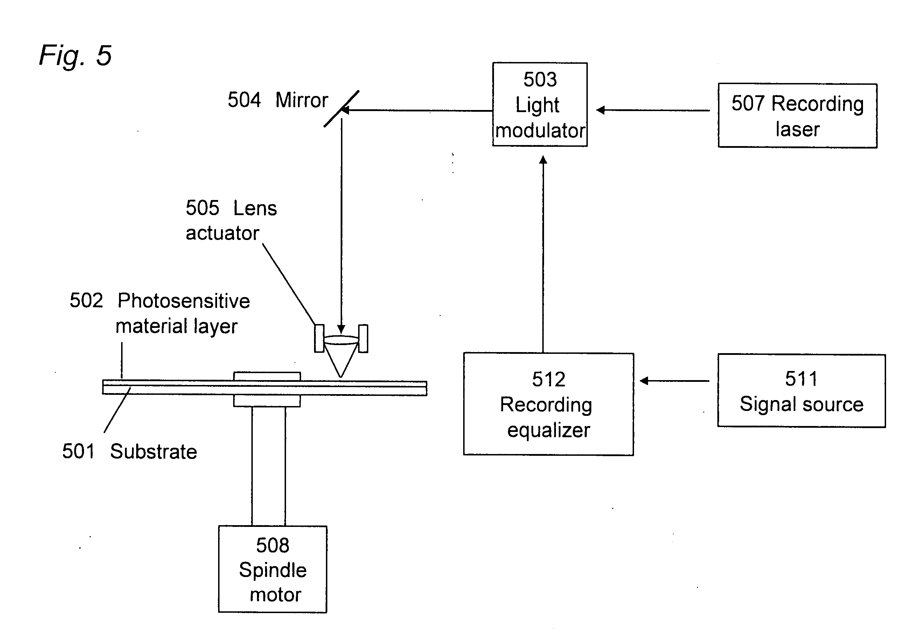

Optical disks are reproduced in large quantities by making master disks or stampers manufactured from master disks and then subjecting them to injection molding. Conventionally, in producing the master disk, an optical disk is formed by spin coating a photosensitive material layer 502 on a substrate of the master disk, e.g. on a surface-abraded glass substrate 501, as indicated in the schematic diagram of Figure 5. Reference numeral 507 denotes a recording laser and reference numeral 508 denotes a spindle motor. Note that, Figure 5 omits a focus controlling laser optical system, a beam amplifier for a recording laser optical system, and the like. An information signal to be recorded, which is generated in a signal source 511, is modulated into a pulse string within a signal pulse, and the signal pulse width is changed by means of a recording equalizer 512, then input into a light modulator 503. The light modulator 503 modulates the intensity of the input laser beam. In this way, the intensity-modulated laser beam is focused onto the photosensitive material layer 502 on the glass substrate 501 after passing through a mirror 504 and then through a lens of lens actuator 505 which has been focus-controlled. This partially alters the photosensitive material layer 502 into a crystallized state. Then, when photosensitive material layer 502 is developed, marks of pits and lands or grooves corresponding to that degree of photosensitivity are formed.

Production of a highly-dense optical disk master disk requires the formation of a small signal pit. The development of such technique has been undertaken (e.g., see Japanese Unexamined Patent Application Publication No. 2001-250279).

However, an organic photosensitive material generally has a photon mode, and exposure depends on the quantity of light. Thus, when a recorded laser spot has the shape of a Gaussian distribution, for example, sites on both sides of the spot are still partially exposed. As such, the shape of a recording pit has a width corresponding to the exposure power, which makes it difficult to stably form a recording pit smaller than the recording spot.

Additionally, as a pattern exposing apparatus for a photosensitive material layer, an electron beam drawing apparatus and the like have been developed, which aid the formation of a minute pattern, and thus high densification. This electron beam drawing apparatus must perform the drawing operation in a high vacuum, and thus has a problem in that the apparatus is large and expensive.

The present invention uses a heat-sensitive material that exhibits a change in state (e.g., from an amorphous phase into a crystalline phase) by temperature increase from light irradiation, rather than the photosensitive material used in conventional art. A heat-sensitive material generally exhibits a change in state when the material reaches a temperature which is equal to or higher than a set temperature, depending on the material. Accordingly, where a recorded laser spot has the shape of a Gaussian distribution, at the site of the spot center at which a high temperature has been reached, there is change in state. But, the sites having small irradiation doses. on both sides of the spot do not achieve a change in state due to an insufficient rise in temperature. Thus, this technique allows a small recording pit to be stably formed as compared to the case where a photosensitive material based on the conventional photon mode is employed.

A heat-sensitive material to be used for producing a master disk of a recording medium preferably satisfies the desired value for the characteristics (1) to (5) given below:
(1) An absorption coefficient with respect to the recording laser beam.
(2) The state-change temperature of the heat-sensitive material.
(3) The difference between the etching rate of an exposed portion and an unexposed portion with respect to a development fluid.
(4) The resistance of unexposed portions to a development fluid.
(5) The resistance to a plating solution in the production of a stamper.

The present invention is a method of producing a master disk for a recording medium, and provides a method of producing a master disk using a heat-sensitive material capable of improving at least the characteristics (1) and (2) above.

Additionally, the present invention has a simple structure, can also utilize an existing apparatus used for producing optical disk master disks, and provides a method for producing a master disk capable of reducing costs compared to when using the above-mentioned electron beam drawing apparatus.

### SUMMARY OF THE INVENTION

In order to solve the above-described problems of the conventional art, the object of the present invention is attained by the techniques below.

A method for producing a master disk for a recording medium of the present invention includes the steps of forming a heat-sensitive material layer on a substrate, partially exposing the heat-sensitive material layer to a laser beam, and forming a pattern of pits and lands by using the difference between the etching rate ratios of an exposed portion and an unexposed portion of the heat-sensitive material layer. The heat-sensitive material layer includes at least Sb and O, and when the composition ratio of O is defined as x, x is defined by 3≤x≤50. Because the composition ratio of O is 3 atom % or more, and because an amorphous state can be more stable even at room temperature, then a pit formed by a laser beam can be made minute. Also, because the composition ratio of O is 50 atom % or less, this enables the absorption coefficient with respect to the laser beam to be sufficiently large, and thus recording stability can be improved.

In the heat-sensitive material layer forming step, when the amount of O in an oxidized film which comprises Sb as the primary element is set equal to x (atom %), and when the oxidized film contains, as an additive, at least one element selected from the group consisting of Ag, Al, Au, Cr, Cu, Fe, Ge, Mo, Nb, Os, Pd, Se, Si, Sm, Ta, Te, Ti, V, and W, and the composition ratio of the additive is set equal to y (atom %), then a heat-sensitive material layer characterized by x being defined by 3≤x≤50 and y being defined by 1≤y≤30, can be formed for the substrate. This improves the resistance of unexposed portions to a development fluid by means of an additive, whereby the surface roughness of the unexposed portions is reduced during development. If the composition ratio of an additive is 1 atom % or more, the aforementioned effects are obtainable. In addition, since the composition ratio of an additive is 30 atom % or less, it will be difficult for the heat-sensitive material layer to inhibit the formation of a crystallized portion by laser irradiation, thereby allowing a pit to be smaller.

In the heat-sensitive material layer forming step, when using a heat-sensitive material of a low oxidation Sb film to which Au, Ge, Nb, Si, Te, Ti, Pd, or W is added, the margin of development fluid concentration can be widened.

The heat-sensitive material layer forming step is performed using a reactive sputtering process, and an oxygen partial pressure during film formation of 0.005 Pa or more is allowable. Film formation under conditions in which the oxygen partial pressure is 0.005 Pa or more can sufficiently increase the amount of oxygen of the film of the heat-sensitive material layer.

Prior to conducting the pits and lands pattern forming step, an annealing step, i.e., an annealing treatment, may be performed such that the temperature of the heat-sensitive material layer is from 50°C to 300°C. Furthermore, the annealing step may also be performed subsequent to conducting the heat-sensitive material layer forming step and the exposing step, and may also be performed after conducting the heat-sensitive material layer forming step and prior to conducting the exposing step. In addition, the annealing step may also be performed simultaneously before and after the exposing step. In this case, because the temperature of the heat-sensitive material layer is 50°C or more, the resistance to the development fluid is increased, and thus the surface roughness of unexposed portions can be decreased during development. Moreover, since the temperature of the heat-sensitive material layer is 300°C or less, the crystallization of the entire thin film will only slightly proceed, and the formation of a crystallized portion due to the laser beam is unlikely to be inhibited.

The annealing treatment is preferably performed with an apparatus such as a clean oven.

In addition, the annealing treatment is preferably performed by laser beam irradiation.

Also, the development in the pits and lands pattern forming step is preferably conducted in an aqueous alkaline solution.

Moreover, the method preferably further comprises a step such that a layer whose thermal conductivity is different from that of the heat-sensitive material layer is placed in contact with the substrate. This enables the temperature control of the heat-sensitive material layer during recording, and, for example, enables attainment of sufficient recording sensitivity and the recording of a mark with a small width.

Additionally, the time from the end of the of the heat-sensitive material layer forming step to the initiation of the development in the pits and lands pattern forming step is preferably within 24 hours. With a time period within 24 hours, the heat-sensitive material layer can maintain the resistance to the development fluid and surface roughness can be suppressed.

Furthermore, these methods can provide a master disk for a recording medium, and the master disk thus obtained can also be used to produce a stamper of a recording medium. Also, a recording medium can be produced from the stamper thus obtained.

As discussed above, the use of an oxide containing Sb in major proportions as the heat-sensitive material can render the production of an optical disk master disk inexpensive and easy. In addition, introduction of an additive into a heat-sensitive material can provide effects including the adjustment of the adsorption coefficient with respect to a laser beam, the improvement of resistance to a development fluid, the extension of the margin in each step, and the like. These manufacturing steps do not need special equipment, since an existing recording machine and a developing device can be used. As such, the present invention contributes a great deal to the high densification of an optical disk.

### BRIEF DESCRIPTION OF THE DRAWINGS

Figure 1 is a diagram showing each step of a method for producing a master disk of a recording medium according to the present invention.
Figure 2 is a block diagram showing an example of recording apparatuses for master disks.
Figure 3 is a diagram showing each step of a method for producing a master disk of a recording medium according to the present invention in the case where an annealing treatment is performed prior to recording with a laser beam.
Figure 4 is a diagram showing each step of a method for producing a master disk of a recording medium according to the present invention in the case where an annealing treatment is performed after recording with a laser beam.
Figure 5 is a block diagram showing an example of conventional recording apparatuses for master disks.

### DESCRIPTION OF THE PREFERRED EMBODIMENTS

In the embodiments of optical media of the present invention, although applications to ROM type optical disks will primarily be set forth, the present invention is not limited to these optical disks and shapes. The present invention can be applied to, for example, the production of master disks of various recording media such as optical magnetic disks and phase change disks having minute pits and lands in information recording layers.

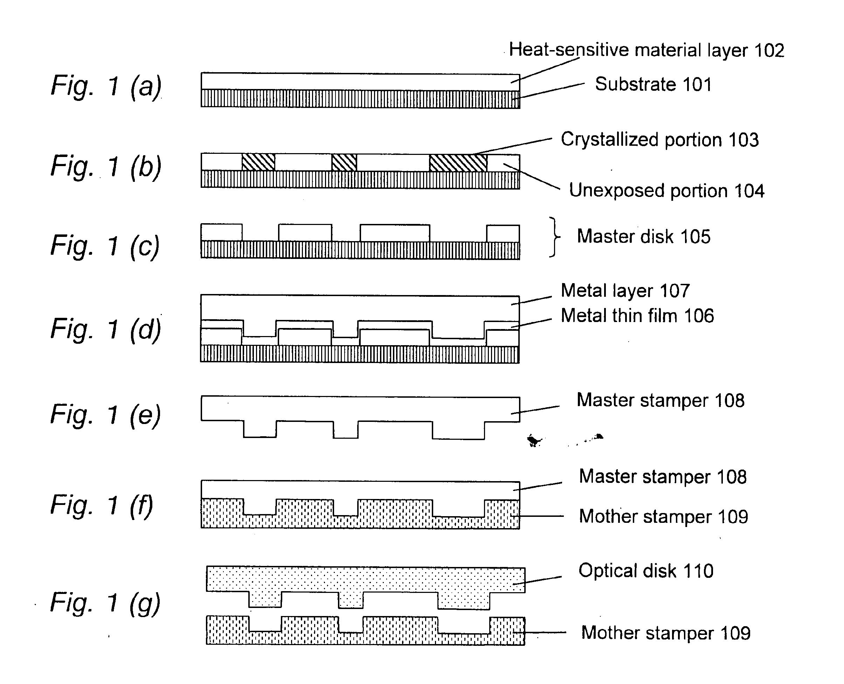

Referring to Figure 1, the method of producing a master disk of a recording medium of the present invention will be described. First, as a substrate 101 for the main structure of the recording medium, an abraded and cleaned glass substrate or a silicon substrate is used, and an oxidized thin film in which Sb is the primary component is formed as a heat-sensitive layer 102 on the surface of the substrate 101 (Figure 1(a)). A laser beam is applied to the heat-sensitive material layer 102 to create a pattern of minute pits and lands to partially form a crystallized portion 103 (Figure 1(b)). Then, the crystallized portion 103 is removed with a development fluid, by utilizing the difference in etching rates of the crystallized portion 103 and an unexposed portion 104, which has not been irradiated with a laser beam (Figure 1(c)). This substrate on which a pattern of pits and lands is formed is referred to as a master disk 105. Subsequently, a metal thin film 106 is formed on the master disk 105. Thereafter, plating is performed using the master disk 105 as the electrode to form a metal layer 107 on the metal thin film 106 (Figure 1(d)). Then, the metal thin film 106 and the metal layer 107 are together peeled from the master disk 105 to produce a master stamper 108 (Figure 1(e)).

A mother stamper 109 can be replicated using this master stamper 108 (Figure 1(f)), and optical information media such as optical disk 110 can be produced in large quantities by means of injection molding using the mother stamper 109 (Figure 1(g)).

Japanese Unexamined Patent Application Publication No. 10-97738 proposes the use of an oxidized film of a chalcogen compound as a heat-sensitive material. As a result of further studies, we have discovered that a thin film (hereinafter, denoted by a low oxidation Sb film), produced by blending Sb with an oxide of Sb, is suitable as the heat-sensitive material for producing the master disk 105 of a highly dense optical recording medium. Examples of existing oxides of Sb include Sb₂O₃, and Sb₂O₅. The standard formation energy values thereof are -1253 kJ/mol and -820 kJ/mol respectively, and thus Sb and Sb₂O₃ are thought to be the primary low oxidation Sb films. Because Sb₂O₃ is colorless, the composition ratio of O in a low oxidation Sb film is adjustable; a low oxidation Sb film including O within a certain range has a large absorption coefficient for a laser beam with a wavelength of 405 nm or less. When a low oxidation Sb film having a large absorption coefficient is irradiated with a laser beam, the temperature of the irradiated site is increased locally, and , a portion of the low oxidation Sb film that was in an amorphous state when the film was formed is crystallized. In other words, the film is phase separated into crystal particles and surrounding Sb₂O₃. The crystal particles are readily soluble in an alkaline solution, and therefore the crystallized portion 103 can be removed with an alkaline solution. That is, a recorded pit can be developed. We were able to form and develop a pit with a diameter of 0.1 µm using an optical system including a recording laser beam of 405 nm and an objective lens having an aperture of 0.9. A low oxidation Sb film is thought to be appropriate as a heat-sensitive material in producing a master disk of a highly dense, read-only type optical disk that requires the formation of minute pits.

A low oxidation Sb film as a heat-sensitive material has widely varying characteristics depending on the composition ratio of O. First, if the amount of O is too small, the composition of the low oxidation Sb film mostly becomes Sb. Hence, it is difficult to stabilize the film in an amorphous state at room temperature, leading to immediate crystallization, even just after film formation. As such, for a low oxidation Sb film having a small composition ratio of O, it is not possible to record a minute pit. Because the formation and the development of the crystallized portion 103 using a laser beam is affected by the size of a crystal particle diameter, the composition ratio of O in a low oxidation Sb film is preferably 3 atom % or more.

In addition, if the amount of O is too large, an absorption coefficient for a laser beam of 405 nm or less becomes small. This is because Sb₂O₃, i.e., an oxide of Sb, is the main component. Since the temperature of the low oxidation Sb film is not increased, even though irradiated with a laser beam, it is unable to form a partially crystallized portion 103. As a result of experiments, the composition ratio of O has been found to be preferably 50 atom % or less.

As described above, an increase in temperature of the film surface from irradiation with a laser beam allows the crystallized portion 103 of the low oxidation Sb film to be partially formed, thereby enabling development with an alkaline solution. Here, the low oxidation Sb film is sensitive to film formation conditions, and development conditions such as pH of the development fluid and development time. Deviation from the appropriate conditions causes surface roughness of the unexposed portion 104.

At a microscopic level, the surface of a low oxidation Sb film is thought to be in an amorphous state in which Sb and Sb₂O₃ are present in a mixed form. On this surface of the low oxidation Sb film, there are some portions that cannot maintain a stable amorphous state immediately after film formation. The surface roughness mentioned above is thought to be attributable to the dissolution of Sb₂O₃ into a development fluid, arising from the portions thereof as starting points, i.e., attributable to the presence of portions of the unexposed portions 104 that are low in resistance to a development fluid even though the surface was not irradiated with a laser beam.

We have found by experimentation that this surface roughness can be greatly reduced by adding the element Ag, Al, Au, Cr, Cu, Fe, Ge, Mo, Nb, Os, Pd, Se, Si, Ta, Te, Ti, V, or W to the low oxide Sb film as an additive. These additives are thought to prevent Sb₂O₃ from dissolving into the development fluid by precipitating from the surface of the low oxidation Sb film; when the composition ratio of the additives is 1 atom % or more, the effect is exhibited. However, if the amount of additive is too large, the formation of the crystallized portion 103 by laser beam irradiation is easily prevented and so the recording pit is difficult to form. Therefore, the composition ratio of these additives is preferably 30 atom % or less.

In addition, this surface roughness can also be reduced by subjecting the low oxidation Sb film to an annealing treatment. As discussed above, it is assumed that although there are some portions of the unexposed portion 104 that cannot remain in a stable amorphous state immediately after film formation, an annealing treatment can generate a thermodynamically stable state, thereby enabling the improvement in the resistance to a development fluid. However, when the temperature during the annealing treatment is too high, the entire film surface of the low oxidation Sb film is crystallized, and is incapable of recording by laser beam irradiation. Thus, the temperature during the annealing treatment is preferably 300°C or less. Also, if the temperature during the annealing treatment is too low, the effect obtained is small. Therefore, the temperature is preferably 50°C or more.

### (Embodiment 1)

In Embodiment 1, a low oxidation film was formed as a heat-sensitive material layer 102 on a substrate 101 such as an abraded glass substrate. After a direct current magnetron sputtering apparatus was equipped with a Sb target and after the glass substrate 101 was fixed on a substrate holder, the inside of the chamber was vacuum discharged using a cryopump up to a high vacuum of 1 x 10⁻⁴ Pa. While vacuum discharging, Ar gas was introduced into the chamber up to 0.10 Pa and then an O₂ gas was introduced up to a total pressure of 0.11 Pa. Thereafter, while rotating the substrate 101, direct current was applied to the Sb target to form the film such that the film thickness of the Sb oxide became 80 nm.

In the present embodiment, by introducing an O₂ gas during film formation, a low oxidation Sb film could be formed on the substrate 101. However, a material with a composition of a low oxidation Sb film may be used for the target material to perform sputtering with Ar gas only.

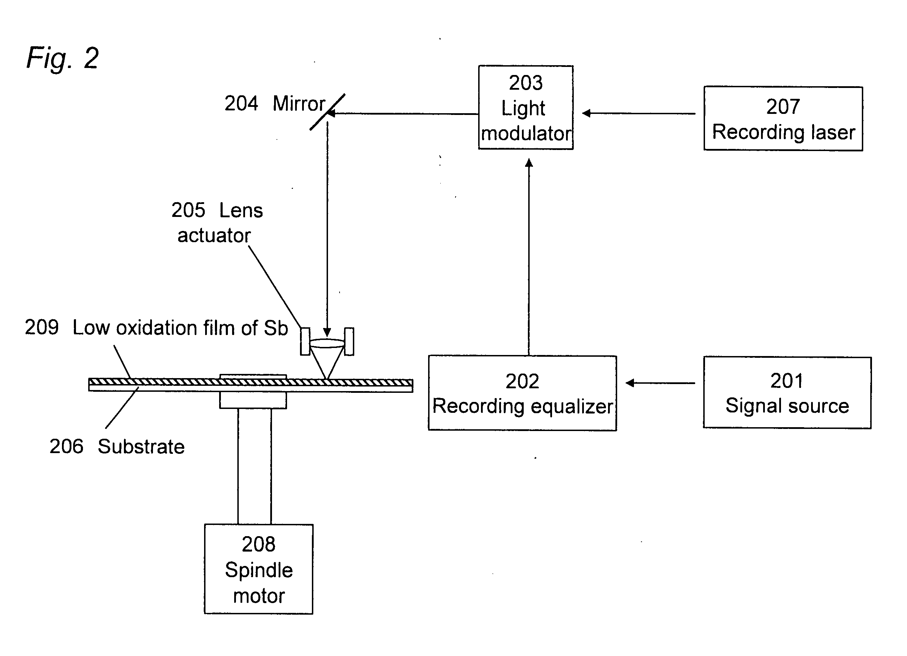

Figure 2 is a block diagram of an example of a recording apparatus of a master disk. Reference numeral 207 denotes a recording laser, 208 is a spindle motor, and 209 is a low oxidation film. Note that, Figure 2 omits a focus controlling laser optical system, a beam amplifier of a recording laser optical system, and the like.

An information signal to be recorded, which is generated in signal source 201, is modulated into a pulse string within a signal pulse, and the signal pulse width is changed by means of a recording equalizer 202, then input into a light modulator 203. The light modulator 203 modulates the intensity of the input laser beam. In this way, the intensity-modulated laser beam is focused onto a thin film of Sb compound on a glass substrate 206 after passing through a mirror 204 and then through a lens of lens actuator 205 which has been focus-controlled. This partially changes the Sb compound into a crystallized state. In the present embodiment a recording laser 207 having a wavelength of 351 nm is used, and the wavelength of this laser beam has a sufficient absorption coefficient for the heat-sensitive material layer 102. However, as long as a laser beam can partially change a portion of the heat-sensitive material layer 102 into the crystallized portion 103, the wavelength thereof is arbitrary. Preferably, a wavelength of 410 nm or less is used, since the use of a short-wavelength laser can decrease the spot diameter of the laser beam.

In order to perform heat recording with highly density, the length of a record signal pulse and the timing of recording need to be adjusted depending on: the length of a target record signal; the interval between a target record signal and a record signal before or after the target record signal; and the length of a record signal before or after a target record signal. For instance, adjustment is in such a way that if a long record pulse is present immediately prior to a record pulse, the head of the record pulse is made delayed, or that when there is a long interval without a signal immediately before a record pulse, the head of a record pulse is made hastened. Additionally, in order to maintain the width of a signal pit within one record pulse constant, a complicated operation is performed such as making the head and end of a signal pulse a little too long, and making the center of the signal pulse a short pulse string, by means of the recording equalizer 202.

Use of a low oxidation Sb film of the present embodiment as the heat-sensitive material layer 102 enabled complete removal of the crystallized portion 103 by immersing the layer in a 2-10% aqueous tetramethylammonium hydroxide solution for a few minutes (herein called the developing step). A minute pit with a track pitch of 0.32 µm and a shortest pit length of 0.14 µm were formed.

Thereafter, a metal thin film 106 of Ni was formed on a master disk 105 in which this minute pits and lands pit was formed, using a magnetron sputtering apparatus, so that the film thickness was from 10 to 50 nm. The resultant material was put on a cathode and then electroformed to produce a metal layer 107 having a thickness of hundreds of µm. Then, the metal thin film 106 and the metal layer 107 thus obtained were together peeled from the master disk 105 to produce a master stamper 108.

Table 1 shows the oxygen partial pressure, the amount of oxygen in the film, and the formation of the crystallized portion 103.

**(Table 1)**

| Oxygen partial pressure (Pa) | Amount of oxygen in film (at %) | Formation of crystallized portion |
|---|---|---|
| 0.002 | 0.00 | Poor |
| 0.005 | 0.03 | Good |
| 0.007 | 1.00 | Good |
| 0.010 | 1.30 | Good |
| 0.015 | 3.20 | Good |
| 0.020 | 5.00 | Good |
| 0.025 | 9.00 | Good |
| 0.030 | 12.00 | Good |
| 0.035 | 19.00 | Good |
| 0.040 | 40.00 | Good |
| 0.060 | 50.00 | Good |
| 0.070 | 60.00 | Poor |

As seen in Table 1, the oxygen partial pressure during film formation correlates with the amount of oxygen in the film formed; the higher the oxygen partial pressure during sputtering, the larger the amount of oxygen contained in the heat-sensitive material layer 102. In the present invention, from the formation of the crystallized portion 103, the oxygen content in the heat-sensitive material layer 102 is specified to be 3% or higher and 50% or lower. As the oxygen content is increased, the absorption coefficient becomes small, which makes it difficult to stably record with a laser beam. Also, as the oxygen content decreases, the stability of the low oxidation Sb film in an amorphous state also decreases, and also distorts the shape of the pit formed by laser beam irradiation. Thus, for an optical disk 110 produced from a mother stamper 109 having a distorted pit, the distorted pit shape of the mother stamper 109 also has a detrimental effect on the optical disk 110. Hence, reproduction by means of a reproducing apparatus detects noise, leading to the inability to obtain a reproduced signal with high quality. Accordingly, if an oxide containing Sb in major proportions is used as the heat-sensitive material layer 102, the concentration of O in the film is preferably 3% or higher and 50% or lower.

In addition, the oxygen partial pressure during film formation correlates with the amount of oxygen in the heat-sensitive material layer 102; the amount of oxygen varies greatly depending on parameters such as the total pressure within the chamber during film formation, the input power during sputtering, the distance between the sputtering target and the substrate 101, and the like. As such, the conditions of the oxygen partial pressure for film-forming the resist of the heat-sensitive material layer 102 having good characteristics are not thought to be generally determined. However, the reaction of Sb with oxygen during film formation requires the minimum oxygen within the chamber. Here, as indicated in Table 1 described above, we have found that conducting the inflow of oxygen such that the oxygen partial pressure within the chamber is at least 0.005 Pa or more enables the reaction of Sb with oxygen to form the oxide on the substrate 101. For this reason, in order to produce an oxide of Sb having good characteristics as a resist of the heat-sensitive material layer 102, the oxygen partial pressure within the chamber during film formation is preferably 0.005 Pa or more.

### (Embodiment 2)

In Embodiment 2, film formation, recording and development were performed in the same manner as that of Embodiment 1. In the present embodiment, when Sb is film-formed as a heat-sensitive material under an atmosphere of O₂, a target of Te using as an additive was electrically discharged at the same time to form a low oxidation film of Sb and Te. The Te content was adjusted by altering the input power of Te during sputtering.

Addition of Te to a heat-sensitive material layer 102 that contains Sb as the main component enabled a reduction in surface roughness of unexposed portion 104 during development. This surface roughness of the unexposed portion 104 is thought to be attributable to low resistance to a development fluid of portions incapable of maintaining a stable amorphous state. In Embodiment 2, it is thought that by addition of Te, the solubility of which is smaller than the solubility of Sb₂O₃, the Te can be separated out on the film surface to prevent Sb₂O₃ from dissolving into the development fluid.

Hereinafter, the content of the additive will be set forth. The effect of reduced surface roughness can be confirmed when the amount of additive in the heat-sensitive material layer 102 is 1 atom % or more. If the amount of Te (additive) is too large, an adverse effect is caused in which the formation of a minute pit string is difficult. This is because, when the amount of additive added to Sb is too large, the concentrations of Sb and O, which are essential to the present invention, are relatively reduced, thereby making it difficult to cause the crystallization of Sb due to laser beam irradiation. The results of these studies have shown that if the content of this additive in the heat-sensitive material layer 102 is 1% or more and 30% or less, the surface roughness can be reduced during development, whereby forming more minute crystallized portion 103, without preventing crystallization of Sb during laser beam irradiation.

Next, the additive material will be discussed. By experimenting with the same film forming method as described above, a low oxidation Sb film was produced to which each of Ag, Al, Au, Cr, Cu, Fe, Ge, Mo, Nb, Os, Pd, Se, Si, Ta, Ti, V, and W were added. As above, the content of the additive was adjusted by altering the electrical power applied to the additive material target; the oxygen content was adjusted by the flow rate of O₂ gas during film formation. For these additives, similar effects to the Te described above were seen, and it was found that the composition ratio of the additive is preferably 1 atom % or more and 30 atom % or less. Addition of these metal materials can increase margins for the time immersed in a development fluid during development. This heat-sensitive material layer 102 allows the production of the master stamper 108 to be easier.

In addition, our studies show that the master disk 105 produced by using a heat-sensitive material of a low oxidation Sb film to which Au, Ge, Nb, Si, Te, Ti, Pd, or W was added can also increase the margin of the development fluid concentration. This suggests that each elemental substance of Au, Ge, Nb, Si, Te, Ti, Pd, and W, or each oxide has some resistance to an alkaline solution, and thus the addition of suitable amounts of these additives to the heat-sensitive material layer 102 can increase the margin for the development conditions. As such, particularly suitable additive materials added to a low oxidation Sb film include Au, Ge, Nb, Si, Te, Ti, Pd, and W, and the composition ratio of an additive thereof is preferably 1 atom % or more and 30 atom % or less.

### (Embodiment 3)

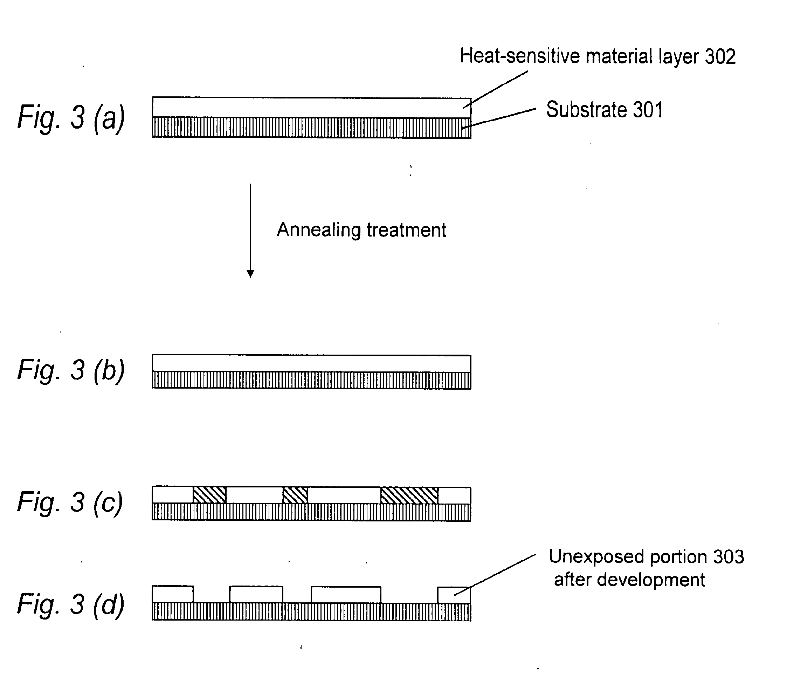

The present embodiment will be set forth referring to Figure 3. In the same manner as that of Embodiment 1, a low oxidation Sb film as a heat-sensitive material layer 302 was formed on a substrate 301 comprising Si by means of the magnetron sputtering process (Figure 3(a)). Thereafter, to prevent the occurrence of defects in unexposed portions from the developing treatment, the heat-sensitive material layer 302 was subjected to an annealing treatment (Figure 3(b)). The annealing treatment here was performed by placing the substrate 301 on which the heat-sensitive material layer 302 was formed in a clean oven. By measuring the temperature of the heat-sensitive material layer 302 and using the same recording apparatus as in Embodiment 1, minute crystallized portions were formed in the heat-sensitive material layer 302 (Figure 3(c)). Subsequently, the crystallized portions were removed by soaking the resultant material in a 2% aqueous tetramethylammonium hydroxide solution and then developing (Figure 3(d)).

In order to quantitatively indicate the surface roughness, here, the extent of the surface roughness was expressed in terms of the number of defects as the index. Table 2 indicates the relationship between the temperature of the annealing treatment prior to development (annealing temperature), the presence or absence of the formation of deteriorated portions, and the number of defects per cm² present in the unexposed portion 303 after development. Additionally, the relationship therebetween for the case without an annealing treatment is also indicated in Table 2. The number of defects was determined under a scanning electron microscope, with holes having a diameter of 0.01 µm or larger being counted as defects.

**(Table 2)**

| Annealing temperature (°C) | Formation of deteriorated portions | Number of defects (number/cm²) |
|---|---|---|
| 35 | Good | 1400 |
| 50 | Good | 2 |
| 100 | Good | 1 |
| 150 | Good | 0 |
| 200 | Good | 0 |
| 250 | Good | 0 |
| 300 | Good | 0 |
| 350 | Poor | 0 |
| 400 | Poor | 1 |
| 410 | Poor | 0 |
| Without annealing treatment | Good | High number |

The number of defects varies greatly depending on the concentration of aqueous tetramethylammonium hydroxide solution, and in any case, the number of defects present in the unexposed portion 303 after development varies depending on the temperature of the annealing treatment. Also, in the case without an annealing treatment, a great number of pits and lands of different sizes are seen on the surface, which makes it impossible to count the number of defects (see Table 2). However, for the case with an annealing treatment, the surface roughness can be reduced. Here, when an annealing treatment is performed such that the temperature of the heat-sensitive material layer 302 becomes 50°C or more, the number of defects is shown to be dramatically reduced. Also, increasing the temperature of the annealing treatment advanced the crystallization of the thin film itself, making it difficult to form the crystallized portion with a laser beam. As such, the temperature of the annealing treatment is preferably from 50°C to 300°C.

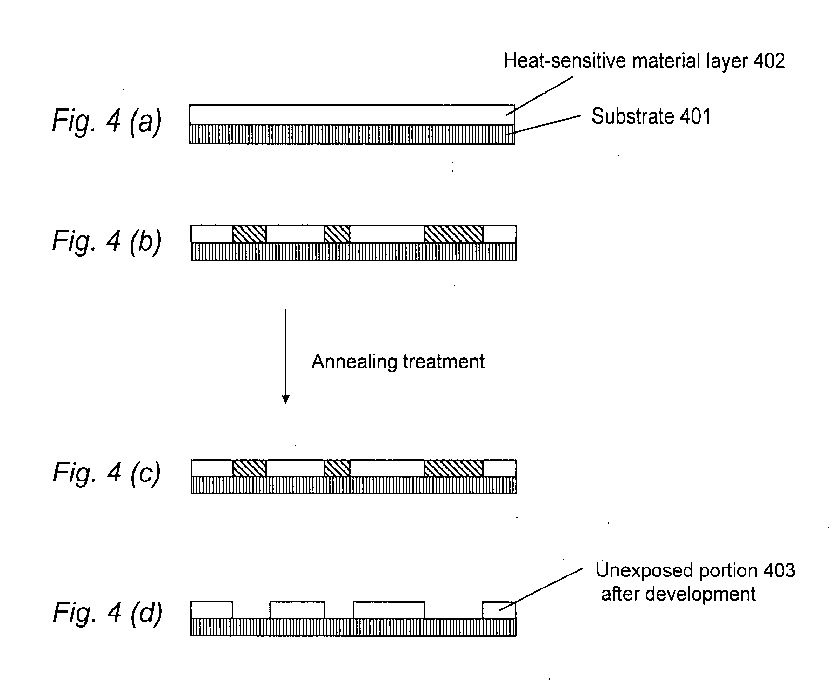

In addition, even when this annealing treatment was performed after performing recording with a laser beam, similar results were obtained. This process is shown in Figure 4. A heat-sensitive material layer 402 was film-formed on a substrate 401 (Figure 4(a)), and then crystallized portions were produced with a laser beam (Figure 4(b)). Then, an annealing treatment was performed (Figure 4(c)), and then developed (Figure 4(c)). After development, an unexposed portion 403 was obtained.

Additionally, an annealing treatment here may be performed both before and after recording with a laser beam.

Note that, this annealing treatment can be performed with a laser beam. For instance, by focusing a laser beam using the recording apparatus shown in Figure 2, the recording apparatus is controlled in such a way that the temperature of a heat-sensitive material becomes 50°C or more.

### (Embodiment 4)

In the present embodiment, film formation, recording and development were performed in the same manner as that of Embodiment 1. In the present embodiment, when a heat-sensitive material of Sb, that is, the heat-sensitive material layer 102, is film-formed under an O₂ atmosphere, a target of Si is electrically discharged at the same time to form a low oxidation film of Sb and Si. The Si content was adjusted by altering the input power of Si during sputtering.

After the heat-sensitive material layer 102 was formed, this heat-sensitive material was allowed to stand at room temperature (25°C). Thereafter, the resulting material was subjected to recording and development, and then the surface roughness and the pit formation of the exposed portion were confirmed. As a result, the surface roughness became increasingly remarkable as the standing time increased. Table 3 shows the relationship between the standing time, the presence or absence of pit formation, and the surface roughness.

**(Table 3)**

| Standing time (hr) | Formation of pit | Number of defects (number/cm²) |
|---|---|---|
| 1 | Good | 0 |
| 5 | Good | 0 |
| 10 | Good | 1 |
| 24 | Good | 0 |
| 30 | Good | 100 |
| 40 | Poor | 150 |

This tendency was seen even when additives other than Si were used in the heat-sensitive material of a low oxidation Sb film. Because the amorphous state of Sb is very unstable, the thermodynamically stable condition having resistance to a development fluid after pit formation is desirably a state immediately after film formation. For this reason, as seen in Table 3, the time period from film formation of the heat-sensitive material layer 102 to exposure and development is preferably within 24 hours.

### (Other Embodiments)

Note that, although in each Embodiment described above, an alkaline solution was used for the developing treatment in forming patterns of pits and lands in the heat-sensitive material layers 102, 302, and 402, additionally, a dry etching process and a wet etching process may use substances other than an alkaline solution. The dry etching process may carry out etching of a thin film of a Sb compound recorded by means of a DC electrical discharge, or RF electrical discharge, in a vacuum, or ion beams, using a mixed gas consisting of inert gas such as argon and reactive gas such as chlorine-based or fluorine-based gas, or a mixed gas consisting of chlorine-based gas and fluorine-based gas. The wet etching process can selectively remove crystallized portions by use of a fluid added as a buffer, including a strong acid such as nitric acid or hydrochloric acid, or a weak acid such as phosphoric acid.

However, these etching processes require the optimization of the conditions of the developing method to be used, and the concentration of the development fluid to be used, depending on the composition of the heat-sensitive material layer to be utilized.

In addition, in each Embodiment described above, the heat-sensitive material layers 102, 302, and 402 were directly film-formed on the glass substrates 101, 301, 402, etc. However, a dielectric film, the heat conductivity of which is different from that of the heat-sensitive material layer, may be formed between the glass substrate and the heat-sensitive material layer, or on the side opposite to the side on which the heat-sensitive material layer of the substrate is. Additionally, a layer whose thermal conductivity is different from that of a heat-sensitive material layer is not limited to such a dielectric film, but may be a metal film or the like. The formation of a film whose thermal conductivity is different from that of a heat-sensitive material layer enables the control of the reaching temperature of the heat-sensitive material during recording.

For example, when a dielectric film such as SiN whose thermal conductivity is lower than that of a heat-sensitive material layer is formed, the heat absorbed into the heat-sensitive material layer during recording by laser beam irradiation is accumulated in the dielectric film layer having lower thermal conductivity. Thus being capable of forming a record mark with a laser beam having a smaller power.

Additionally, if a metal film such as Al, whose thermal conductivity is larger than that of a heat-sensitive material layer is formed, the heat absorbed into the heat-sensitive material layer during recording by laser beam irradiation can be diffused in the substrate direction, while the heat is restricted from diffusing in the plane direction, thereby coming to be capable of more stably recording a mark having a small width.

In this way, controlling the thermal conduction irradiated with a laser beam can more stably form a pit having a desired width.

Note that, regarding the conditions for each step of a method for producing a master disk in order to miniaturize and stabilize the recording, the master disk 105 and the optical disk 110 may be produced by a manufacturing method to which each condition described above is additionally applied. For instance, a smaller recording pit may be more stably formed by, for example, a manufacturing method that involves adding an additive (Si, Te, etc.) in the film formation of a heat-sensitive material layer while keeping a partial pressure of 0.005 Pa or more for sputtering, and then forming a dielectric film or the like whose thermal conductivity is different from that of the heat-sensitive material layer between a glass substrate and the heat-sensitive material layer, while further performing an annealing treatment for the heat-sensitive material layer. Also, the conditions of each of these steps may be combined in various ways to produce the master disk 105 and the optical disk 110.

### (Industrial Applicability)

A method for producing a master disk of an optical recording medium according to the present invention, can inexpensively and easily produce a master disk of an optical disk, and is particularly useful as a method for producing a master disk of optical disk used for reproducing information, and the like.

## Claims

1. A method of producing a master disk for a recording medium, comprising:
a layer forming step of forming a heat-sensitive material layer on a substrate;
an exposure step of partially exposing said heat-sensitive material layer to a laser beam; and
a pit and land pattern forming step which uses a difference between etching rates of an exposed portion and an unexposed portion of said heat-sensitive material layer to form a pattern of pits and lands, wherein
said heat-sensitive material layer comprises at least Sb and O, and
when the composition ratio of O is defined as x (atom %), x is defined as 3≤x≤50.

2. The method of producing a master disk for a recording medium according to claim 1, wherein
said heat-sensitive material layer contains, as an additive, at least one element selected from the group consisting of Ag, Al, Au, Cr, Cu, Fe, Ge, Mo, Nb, Os, Pd, Se, Si, Ta, Te, Ti, V, and W, and
when the composition ratio of said additive is defined as y (atom %), y is defined as 1≤y≤30.

3. The method of producing a master disk for a recording medium according to claim 2, wherein said additive comprises at least one element selected from the group consisting of Au, Ge, Te, Nb, Pd, Si, Ti, and W.

4. The method of producing a master disk for a recording medium according to any one of claims 1 to 3, wherein in said layer forming step, a reactive sputtering process is used.

5. The method of producing a master disk for a recording medium according to claim 4, wherein a sputtering gas used in said layer forming step contains at least oxygen, and the oxygen partial pressure is 0.005 Pa or more.

6. The method of producing a master disk for a recording medium according to any one of claims 1 to 5, wherein prior to said pit and land pattern forming step, the method further comprises an annealing step for heating said heat-sensitive material layer such that the temperature of said heat-sensitive material layer is greater than or equal to 50°C and less than or equal to 300°C.

7. The method of producing a master disk for a recording medium according to claim 6, wherein said annealing step is performed after said layer forming step and said exposure step.

8. The method of producing a master disk for a recording medium according to claim 6, wherein said annealing step is performed after said layer forming step and prior to said exposure step.

9. The method of producing a master disk for a recording medium according to any one of claims 6 to 8, wherein said annealing step is performed by applying a laser beam.

10. The method of producing a master disk for a recording medium according to any one of claims 1 to 9, wherein said pit and land pattern forming step is performed using an aqueous alkaline solution.

11. The method of producing a master disk for a recording medium according to any one of claims 1 to 10, further comprising a second layer forming step of forming a layer whose thermal conductivity is different from that of said heat-sensitive material layer and which contacts said substrate.

12. The method of producing a master disk for a recording medium according to any one of claims 1 to 11, wherein the time from completing the layer forming step to initiation of the pit and land pattern forming step is within 24 hours.

13. A master disk produced by the method of producing a master disk for a recording medium according to any one of claims 1 to 12.

14. A stamper manufacturing method wherein a stamper for a recording medium is produced using the master disk according to claim 13.

15. A stamper of a recording medium formed by using the master disk according to claim 13.

16. A recording medium manufacturing method for producing a recording medium using the stamper according to claim 15.

17. A recording medium formed with the stamper according to claim 15.
